# EUROPEAN PATENT APPLICATION

(11) **EP 4 425 438 A1**
(43) Date of publication of application: **04.09.2024**
(21) Application number: 22895445.9
(22) Date of filing: 04.11.2022
(51) Int. Cl.: G06T 19/00, H04L 67/131, H04L 67/52, G06F 3/01, G09G 5/00, G09G 5/36, G09G 5/37

(54) **INFORMATION PROCESSING DEVICE, INFORMATION PROCESSING METHOD, AND PROGRAM**

(30) Priority: 19.11.2021 JP 2021188349
(71) Applicant: Sony Group Corporation, Tokyo 108-0075 (JP)
(72) Inventor: TOKUTAKE Kenji, Tokyo 108-0075 (JP)
(74) Representative: D Young & Co LLP
(86) International application number: PCT/JP2022/041124
(87) International publication number: WO 2023/090163

(57) **Abstract**

The present disclosure relates to an information processing device, an information processing method, and a program, in which seamless service provision between different spaces is capable of being realized.

A matching processing unit matches a coordinate system set in a first space in which a first user is present with a coordinate system set in a second space in which a second user is present, and a presentation control unit controls presentation of an interaction with one user in accordance with a motion of the other user on the basis of positional information and motion information of the first user and positional information and motion information of the second user in the matched coordinate system. The present disclosure can be applied to a VR/AR synchronization service that synchronizes a VR space with a real space.

## Description

### TECHNICAL FIELD

The present disclosure relates to an information processing device, an information processing method, and a program, and particularly, to an information processing device, an information processing method, and a program, in which seamless service provision between different spaces is capable of realized.

### BACKGROUND ART

Patent Document 1 discloses a technology for reflecting a real world object in a virtual space.

In recent years, with the spread of a virtual reality (VR) technology, not only a head mounted display (HMD) but also viewing of a VR image on a smartphone has spread together with its content. On the other hand, although an augmented reality (AR) technology is currently limited to application to a smartphone, AR glasses, which have been reduced in weight and improved in design, are expected to be widely used.

### CITATION LIST

### PATENT DOCUMENT

Patent Document 1: Japanese Patent Application Laid-Open No. 2010-282497

### SUMMARY OF THE INVENTION

### PROBLEMS TO BE SOLVED BY THE INVENTION

VR and AR are based on similar technologies except for the display, and in the future, a technology capable of coming and going between different spaces such as VR and AR in social life is expected.

The present disclosure has been made in view of such a situation, and enables provision of a seamless service between different spaces.

### SOLUTIONS TO PROBLEMS

According to the present disclosure, there is provided an information processing device including: a matching processing unit configured to match a coordinate system set in a first space in which a first user is present with a coordinate system set in a second space in which a second user is present; and a presentation control unit configured to control presentation of an interaction with one user in accordance with a motion of the other user on the basis of positional information and motion information of the first user and positional information and motion information of the second user in the matched coordinate system.

According to the present disclosure, there is provided an information processing method including: by an information processing device, matching a coordinate system set in a first space in which a first user is present with a coordinate system set in a second space in which a second user is present; and controlling presentation of an interaction with one user in accordance with a motion of the other user on the basis of positional information and motion information of the first user and positional information and motion information of the second user in the matched coordinate system.

According to the present disclosure, there is provided a program for causing an information processing device to execute processing of: matching a coordinate system set in a first space in which a first user is present with a coordinate system set in a second space in which a second user is present; and controlling presentation of an interaction with one user in accordance with a motion of the other user on the basis of positional information and motion information of the first user and positional information and motion information of the second user in the matched coordinate system.

In the present disclosure, a coordinate system set in a first space in which a first user is present is matched with a coordinate system set in a second space in which a second user is present, and presentation of an interaction with one user in accordance with a motion of the other user is controlled on the basis of positional information and motion information of the first user and positional information and motion information of the second user in the matched coordinate system.

### BRIEF DESCRIPTION OF DRAWINGS

Fig. 1 is a diagram illustrating an overview of a VR/AR synchronization service to which a technology according to the present disclosure is applied.
Fig. 2 is a diagram illustrating a configuration example of a synchronization system according to an embodiment of the present disclosure.
Fig. 3 is a block diagram illustrating a functional configuration example of a space recognition unit that executes SLAM.
Fig. 4 is a flowchart for describing a flow of operation of a VR device.
Fig. 5 is a flowchart for describing a flow of operation of an AR device.
Fig. 6 is a flowchart for describing a flow of operation of a synchronization service provision device.
Fig. 7 is a diagram for describing matching between a coordinate system of a VR space and a coordinate system of a real space.
Fig. 8 is a diagram illustrating a presentation example of a VR space and a presentation example of a real space.
Fig. 9 is a diagram for describing a presentation example of an interaction.
Fig. 10 is a diagram for describing a presentation example of an interaction.
Fig. 11 is a diagram illustrating a presentation example of a VR space and a presentation example of a real space.
Fig. 12 is a flowchart for describing a flow of an operation of a virtual object.
Fig. 13 is a diagram for describing a presentation example of an interaction.
Fig. 14 is a diagram for describing sharing of an object.
Fig. 15 is a diagram illustrating a presentation example of a VR space and a presentation example of a real space.
Fig. 16 is a diagram illustrating another configuration example of a synchronization system.
Fig. 17 is a diagram illustrating a presentation example of a VR space and a presentation example of a real space.
Fig. 18 is a diagram illustrating a presentation example of a VR space.
Fig. 19 is a diagram illustrating a presentation example of a VR space.
Fig. 20 is a flowchart for describing a flow of a movement in a metaverse.
Fig. 21 is a block diagram illustrating a configuration example of hardware of a computer.

### MODE FOR CARRYING OUT THE INVENTION

Hereinafter, modes for carrying out the present disclosure (hereinafter referred to as embodiments) will be described. Note that the description will be made in the following order.

1. Overview of VR/AR synchronization service
2. Configuration and operation of synchronization system
3. Presentation example of interaction
4. Example of interaction in multi-metaverse
5. Configuration example of computer

### <1. Overview of VR/AR synchronization service>

In recent years, a virtual space service called a metaverse mainly used for a game has been rapidly launched. It is assumed that a VR technology used in the metaverse is merged with the AR technology to be immersed in real life.

The VR technology has been used in many single and independent use cases such as games. In the future, it is expected that the activity in the metaverse will has social aspects, and contents and events in the metaverse will be synchronized with the real life, and thus it is possible to come and go between VR and AR.

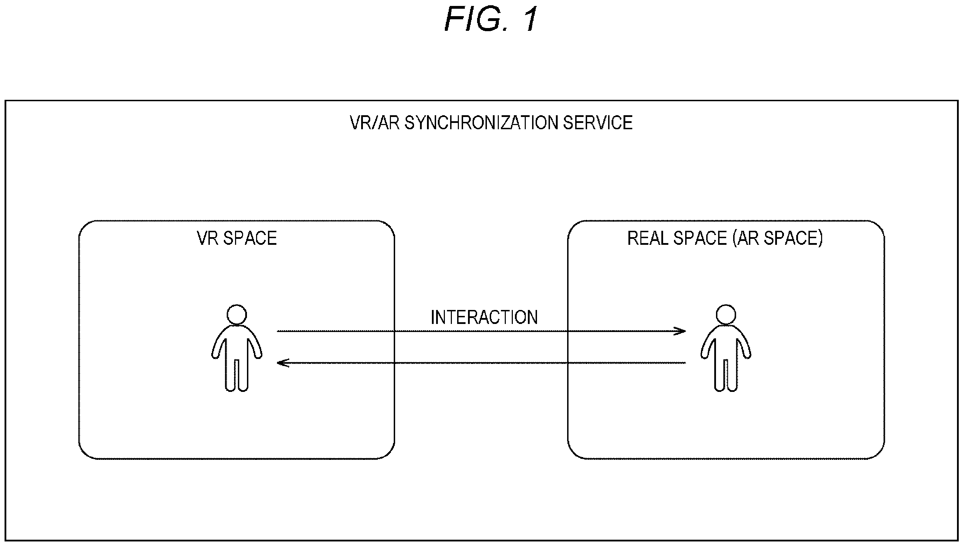

Fig. 1 is a diagram illustrating an overview of a VR/AR synchronization service to which a technology according to the present disclosure is applied.

In the VR/AR synchronization service illustrated in Fig. 1, users who receive independent services in the VR space and the real space (hereinafter, also referred to as AR space or AR display) can come and go between the VR and the AR. Specifically, between a user in the VR space and a user in the real space, providing a seamless service between VR and AR is realized by presenting an interaction with one user according to the motion of the other user.

Thus, the user can remotely log in to the VR space, and receive an update from the VR space in the real space, the space to which user has logged in becomes a space close to social life, and the users in the respective spaces can share their activities.

### <2. Configuration and operation of synchronization system>

Hereinafter, a configuration and operation of a synchronization system that implements the VR/AR synchronization service of Fig. 1 will be described.

### (Entire configuration of synchronization system)

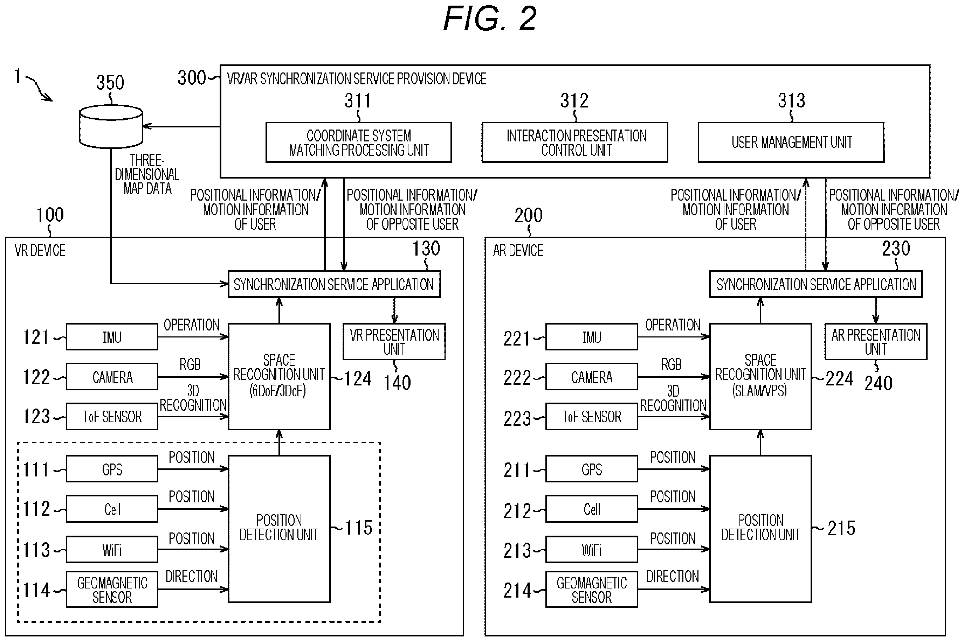

Fig. 2 is a diagram illustrating a configuration example of the synchronization system according to an embodiment of the present disclosure.

A synchronization system 1 in Fig. 2 includes a VR device 100, an AR device 200, a VR/AR synchronization service provision device 300 (hereinafter, also simply referred to as a synchronization service provision device 300), and a three-dimensional map data server 350.

In the synchronization system 1, the VR device 100 and the AR device 200 are used by any user. The user of the VR device 100 or the AR device 200 can log in to the VR space or the AR space by acquiring an account of a VR service or an AR service provided by the synchronization service provision device 300.

Here, the VR service and the AR service are integrally provided to the user as the same service. The user can enjoy one service and communicate with the other user who receives the other service.

### (Configuration of VR device)

The VR device 100 is a device for providing a VR service to the user, and is configured as an HMD, VR goggles, or the like worn by the user. Furthermore, the VR device 100 may be configured as a wide-field display of an entire celestial sphere type, a half celestial sphere type, a dome type, or the like connected to a computer.

The VR device 100 includes a global positioning system (GPS) sensor 111, a cell ID acquisition unit 112, a WiFi communication unit 113, a geomagnetic sensor 114, and a position detection unit 115.

The GPS sensor 111 measures a position on the basis of a radio wave from a GPS satellite, and supplies positional information indicating the position to the position detection unit 115.

The cell ID acquisition unit 112 measures a position by acquiring a cell ID from a mobile phone base station, and supplies positional information indicating the position to the position detection unit 115.

The WiFi communication unit 113 measures a position by detecting a radio wave from a surrounding access point through wireless communication such as Wi-Fi (registered trademark), and supplies positional information indicating the position to the position detection unit 115.

The geomagnetic sensor 114 measures a direction by detecting geomagnetism, and supplies direction information indicating the direction to the position detection unit 115.

The position detection unit 115 detects the position and direction of the VR device 100 in the real space on the basis of information from each of the GPS sensor 111, the cell ID acquisition unit 112, the WiFi communication unit 113, and the geomagnetic sensor 114.

The VR device 100 further includes an inertial measurement unit (IMU) 121, a camera 122, a time of flight (ToF) sensor 123, and a space recognition unit 124.

The IMU 121 supplies movement information indicating the movement of the VR device 100 to the space recognition unit 124 by detecting the angles and accelerations of the three axes.

The camera 122 captures an image of an environment around the VR device 100 to acquire an RGB image, and supplies the RGB image to the space recognition unit 124.

The ToF sensor 123 senses the environment around the VR device 100 to three-dimensionally recognize the environment around the VR device 100, and supplies the recognition result to the space recognition unit 124.

The space recognition unit 124 performs space recognition processing in the VR space on the basis of information from the IMU 121, the camera 122, and the ToF sensor 123, and the position and direction detected by the position detection unit 115.

Specifically, the space recognition unit 124 performs the space recognition processing in a three degrees of freedom (3DoF) mode or the space recognition processing in a 6DoF mode in the VR space presented by the VR device 100. In the 3DoF mode, the position and motion of the user in the VR space are recognized on the basis of three motions around three axes, such as rotation and tilting of the head and neck of the user. In the 6DoF mode, in addition to three motions in the 3DoF mode, the position and motion of the user in the VR space are recognized on the basis of the user moving forward and backward, leftward and rightward, and upward and downward.

The position and motion of the user in the VR space, which are recognized by the space recognition unit 124, are supplied to a synchronization service application 130.

The synchronization service application 130 is application software for providing the VR service to the user wearing the VR device 100, and controls presentation of the VR space to the user under the control of the synchronization service provision device 300.

The synchronization service application 130 supplies the synchronization service provision device 300 with positional information indicating the position of the user wearing the VR device 100 in the VR space and motion information indicating the motion. Furthermore, the synchronization service application 130 acquires positional information and motion information of the user wearing the AR device 200 (opposite user) from the synchronization service provision device 300. The motion information may include, as the motion of the user, information indicating emotions such as facial expression, utterance content, and joy, anger, grief and pleasure, in addition to a posture (pose) and a body orientation (rotation).

The synchronization service application 130 controls display of an avatar of the opposite user in the VR space, the avatar being presented to the user wearing the VR device 100, on the basis of the positional information and motion information of the opposite user.

A VR presentation unit 140 is configured as, for example, a non-transmissive display, and presents the VR space to the user wearing the VR device 100 or displays the avatar of the opposite user in the VR space under the control of the synchronization service application 130.

Note that, in the VR device 100, even when the GPS sensor 111, the cell ID acquisition unit 112, the WiFi communication unit 113, the geomagnetic sensor 114, and the position detection unit 115, which are surrounded by a broken line in the drawing, are not provided, the VR device 100 can operate.

### (Configuration of AR device)

The AR device 200 is a device for providing an AR service to the user, and is configured as a mobile terminal such as a smartphone, an AR glasses, or the like, which is held or worn by the user.

The AR device 200 includes a GPS sensor 211, a cell ID acquisition unit 212, a WiFi communication unit 213, a geomagnetic sensor 214, and a position detection unit 215.

The GPS sensor 211, the cell ID acquisition unit 212, the WiFi communication unit 213, the geomagnetic sensor 214, and the position detection unit 215 may be respectively similar to the GPS sensor 111, the cell ID acquisition unit 112, the WiFi communication unit 113, the geomagnetic sensor 114, and the position detection unit 115, which are included in the VR device 100.

The AR device 200 further includes an IMU 221, a camera 222, a ToF sensor 223, and a space recognition unit 224.

The IMU 221, the camera 222, and the ToF sensor 223 may be respectively similar to the IMU 121, the camera 122, and the ToF sensor 123, which are included in the VR device 100.

The space recognition unit 224 performs space recognition processing in the real space on the basis of information from the IMU 221, the camera 222, and the ToF sensor 223, and the position and direction detected by the position detection unit 215.

Specifically, the space recognition unit 224 performs space recognition processing in the real space by using simultaneous localization and mapping (SLAM) and visual positioning service (VPS). The space recognition unit 224 estimates a self-position and creates a three-dimensional map by executing SLAM. Then, the space recognition unit 224 recognizes the position and motion of the user in the real space on the basis of the created three-dimensional map and the RGB image captured by the camera 222 by the VPS.

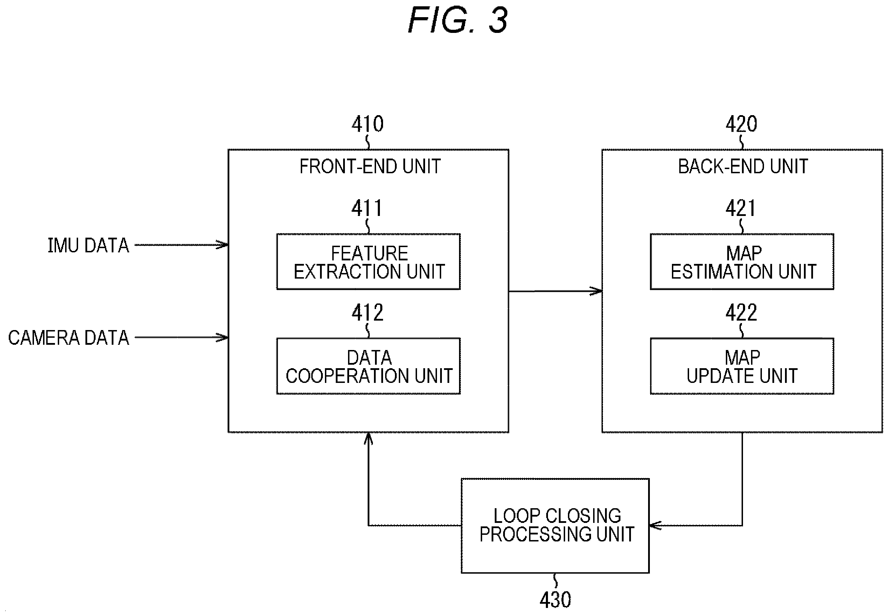

Fig. 3 is a block diagram illustrating a functional configuration example of the space recognition unit 224 that executes SLAM.

The space recognition unit 224 that executes SLAM includes a front-end unit 410, a back-end unit 420, and a loop closing processing unit 430.

The front-end unit 410 executes processing based on information from the sensor. The front-end unit 410 includes a feature extraction unit 411 and a data cooperation unit 412. The feature extraction unit 411 extracts a feature point of the surrounding object on the basis of IMU data and camera data. The data cooperation unit 412 associates the feature point extracted by the feature extraction unit 411 with each object. In this way, the position of the surrounding object and the movement amount of the user are estimated.

The back-end unit 420 executes processing not based on information from the sensor. The back-end unit 420 includes a map estimation unit 421 and a map update unit 422. The map estimation unit 421 estimates the three-dimensional map on the basis of the position of the surrounding object and the movement amount of the user. The map update unit 422 updates the three-dimensional map estimated by the map estimation unit 421 on the basis of the position of the surrounding object and the movement amount of the user.

The loop closing processing unit 430 reduces a cumulative error in self-position estimation by closing a loop.

Note that the space recognition unit 224 that executes SLAM is not limited to the configuration illustrated in Fig. 3, and may adopt other configurations.

Returning to the description of Fig. 2, the position and motion of the user in the real space, which are recognized by the space recognition unit 224, are supplied to a synchronization service application 230.

The synchronization service application 230 is application software for providing the AR service to the user wearing the AR device 200, and controls presentation of AR information to the user and presentation of an interaction using the AR information under the control of the synchronization service provision device 300.

The synchronization service application 230 supplies the synchronization service provision device 300 with positional information and motion information in the real space of the user holding or wearing the AR device 200. Furthermore, the synchronization service application 230 acquires positional information and motion information of the user wearing the VR device 100 (opposite user) from the synchronization service provision device 300.

The synchronization service application 230 controls display of an avatar of the opposite user superimposed in the real space, the avatar being presented to the user via the AR device 200, on the basis of the positional information and motion information of the opposite user.

An AR presentation unit 240 is configured as, for example, a transmissive display, and displays the AR information and the avatar of the opposite user in a superimposed manner in the real space imaged by the AR device 200 or in a display through which the real space is seen under the control of the synchronization service application 230.

### (Configuration of synchronization service provision device)

The synchronization service provision device 300 is configured as a cloud server built on a so-called cloud.

The synchronization service provision device 300 includes a coordinate system matching processing unit 311, an interaction presentation control unit 312, and a user management unit 313.

The coordinate system matching processing unit 311 matches a coordinate system set in the VR space in which a user (first user) of the VR device 100 is present with a coordinate system set in the real space (AR space) in which a user (second user) of the AR device 200 is present.

The interaction presentation control unit 312 controls presentation of an interaction with one user according to the motion of the other user on the basis of the positional information and motion information of each of the first user and the second user in the coordinate system matched by the coordinate system matching processing unit 311. Furthermore, the interaction presentation control unit 312 controls the presentation of the avatar corresponding to one user to the other user on the basis of the positional information and motion information of each of the first user and the second user in the matched coordinate system.

The user management unit 313 manages a user who use the VR service or the AR service provided by the synchronization service provision device 300. Specifically, the user management unit 313 gives an account to each user who uses the VR service or the AR service, and manages login to or logout from the VR space or the AR space and information regarding all users who have logged in, on the basis of the account.

### (Three-dimensional map data server)

The three-dimensional map data server 350 may be also configured as a cloud server built on a so-called cloud.

The three-dimensional map data server 350 stores three-dimensional map data corresponding to the real space, and supplies, to the VR device 100, the three-dimensional map data corresponding to the positional information from the VR device 100 on the basis of an instruction from the synchronization service provision device 300 (interaction presentation control unit 312).

In the VR device 100, the VR space based on the three-dimensional map data from the three-dimensional map data server 350 is presented under the control of the synchronization service application 130 (interaction presentation control unit 312).

Hereinafter, a flow of the basic operations of devices constituting the synchronization system 1 will be described.

### (Operation of VR device)

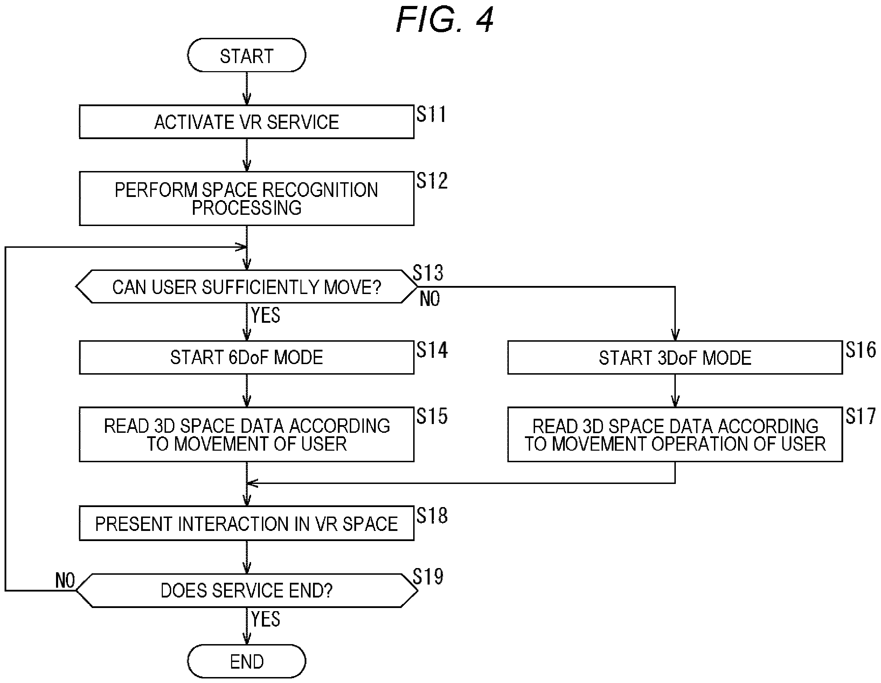

First, the flow of the operation of the VR device 100 will be described with reference to the flowchart of Fig. 4.

In step S11, the synchronization service application 130 activates the VR service according to the operation of the user wearing the VR device 100. Thus, the user can log in to the VR space.

In step S12, the space recognition unit 124 performs space recognition processing in the VR space. At this time, the synchronization service provision device 300 performs matching of the coordinate system set in the VR space with the coordinate system set in the real space, which are presented by the VR device 100.

In step S13, the space recognition unit 124 determines whether or not the user wearing the VR device 100 can sufficiently move in the space. Here, on the basis of information from each of the IMU 121, the camera 122, and the ToF sensor 123, it is determined whether or not there is no obstacle or the like around the user and the user can move forward and backward, leftward and rightward, and upward and downward.

In a case where it is determined in step S13 that the user can sufficiently move in the space, the processing proceeds to step S14, and the space recognition unit 124 starts the space recognition processing in the 6DoF mode.

In step S15, the synchronization service application 130 reads the three-dimensional map data corresponding to the real space from the three-dimensional map data server 350 as 3D space data for presenting the VR space in accordance with the movement of the user in the 6DoF mode.

On the other hand, in a case where it is determined in step S13 that the user cannot sufficiently move in the space, the processing proceeds to step S16, and the space recognition unit 124 starts the space recognition processing in the 3DoF mode.

In step S17, the synchronization service application 130 reads the three-dimensional map data corresponding to the real space from the three-dimensional map data server 350 as the 3D space data for presenting the VR space in accordance with the movement operation of the user in the 3DoF mode.

In step S15 or step S17, when the VR space is presented by the VR presentation unit 140 by reading the 3D space data, the processing proceeds to step S18.

In step S18, the synchronization service application 130 presents various types of interactions in the VR space under the control of the synchronization service provision device 300. For example, an interaction corresponding to the motion of the opposite user holding or wearing the AR device 200 is presented to the user wearing the VR device 100.

In step S19, the synchronization service application 130 determines whether or not the VR service ends according to the operation of the user wearing the VR device 100.

In a case where it is determined in step S19 that the VR service does not end, the processing returns to step S13, and the presentation of the VR space and the presentation of the interaction therein are repeated to the user wearing the VR device 100.

On the other hand, in a case where it is determined in step S19 that the VR service ends, the presentation of the VR space and the interaction therein to the user wearing the VR device 100 ends, and the user logs out from the VR space.

### (Operation of AR device)

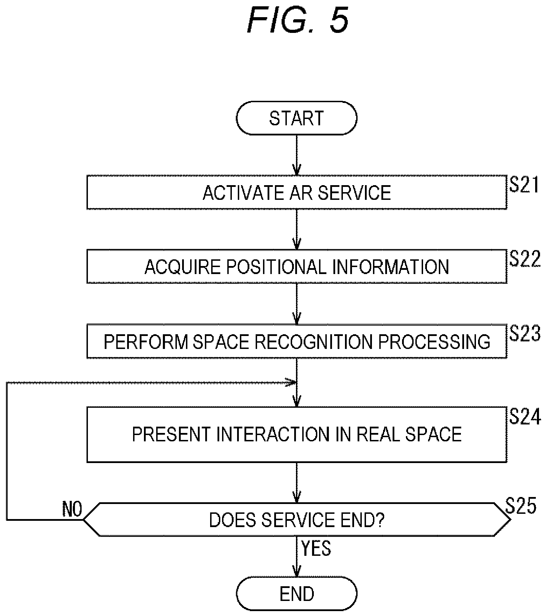

Next, the flow of the operation of the AR device 200 will be described with reference to the flowchart of Fig. 5.

In step S21, the synchronization service application 230 activates the AR service according to the operation of the user holding the AR device 200. Thus, the user can log in to the AR space.

In step S22, the position detection unit 215 acquires the positional information of the AR device 200 in the real space. Specifically, the position detection unit 215 detects the position and direction of the AR device 200 in the real space on the basis of information from each of the GPS sensor 211, the cell ID acquisition unit 212, the WiFi communication unit 213, and the geomagnetic sensor 214.

In step S23, the space recognition unit 224 performs space recognition processing in the real space by using SLAM and VPS. At this time, the synchronization service provision device 300 performs matching of the coordinate system set in the real space with the coordinate system set in the VR space, which are presented by the VR device 100.

In step S24, the synchronization service application 230 presents various types of interactions in the real space under the control of the synchronization service provision device 300. For example, an interaction corresponding to the motion of the opposite user wearing the VR device 100 is presented to the user holding or wearing the AR device 200.

In step S25, the synchronization service application 230 determines whether or not the AR service ends according to the operation of the user holding or wearing the AR device 200.

In a case where it is determined in step S25 that the AR service does not end, the processing returns to step S24, and the presentation of the real space (AR space) and the presentation of the interaction therein are repeated to the user holding or wearing the AR device 200.

On the other hand, in a case where it is determined in step S25 that the AR service ends, the presentation of the real space (AR space) and the interaction therein to the user holding the AR device 200 ends, and the user logs out from the AR space.

### (Operation of synchronization service provision device)

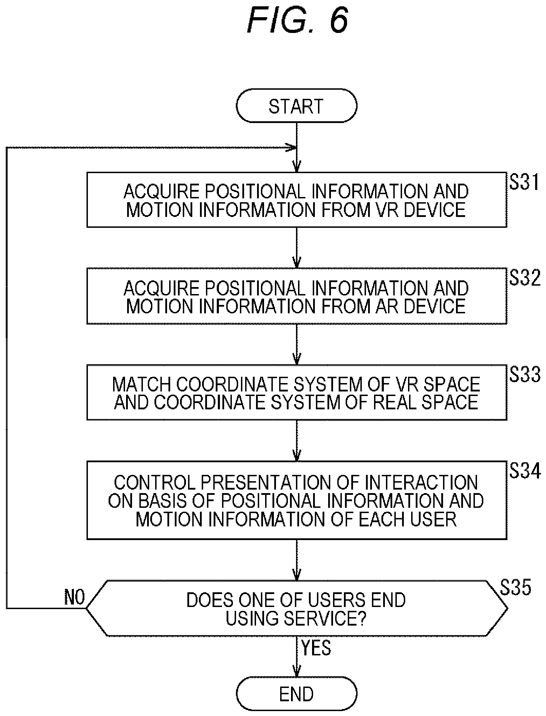

Finally, Fig. 6 illustrates a flow of the operation of the synchronization service provision device 300 with reference to a flowchart of Fig. 6. The processing of Fig. 6 is started when the VR service is activated in the VR device 100 and the AR service is activated in the AR device 200. Here, the VR service and the AR service are integrally provided to the user as the same service, and it is assumed that each user has an account of the service and logs in.

In step S31, the coordinate system matching processing unit 311 acquires positional information and motion information from the VR device 100.

In step S32, the coordinate system matching processing unit 311 acquires positional information and motion information from the AR device 200.

In step S33, the coordinate system matching processing unit 311 matches the coordinate system of the VR space with the coordinate system of the real space on the basis of the positional information and motion information from each of the VR device 100 and the AR device 200.

In step S34, the interaction presentation control unit 312 controls the presentation of the interaction on the basis of the positional information and motion information of each user in the matched coordinate system.

In step S35, the interaction presentation control unit 312 determines whether or not any user ends using the service (logs out).

In a case where it is determined in step S35 that none of the users ends using the service (none of the users logs out), the processing returns to step S31, and the matching between the coordinate system of the VR space and the coordinate system of the real space and the presentation of the interaction are repeated.

On the other hand, in a case where it is determined in step S35 that any user ends using the service (logs out), the presentation of the interaction ends. Note that, in a case where any further user logs in to the service, the presentation of the interaction between the logged-in users is continued.

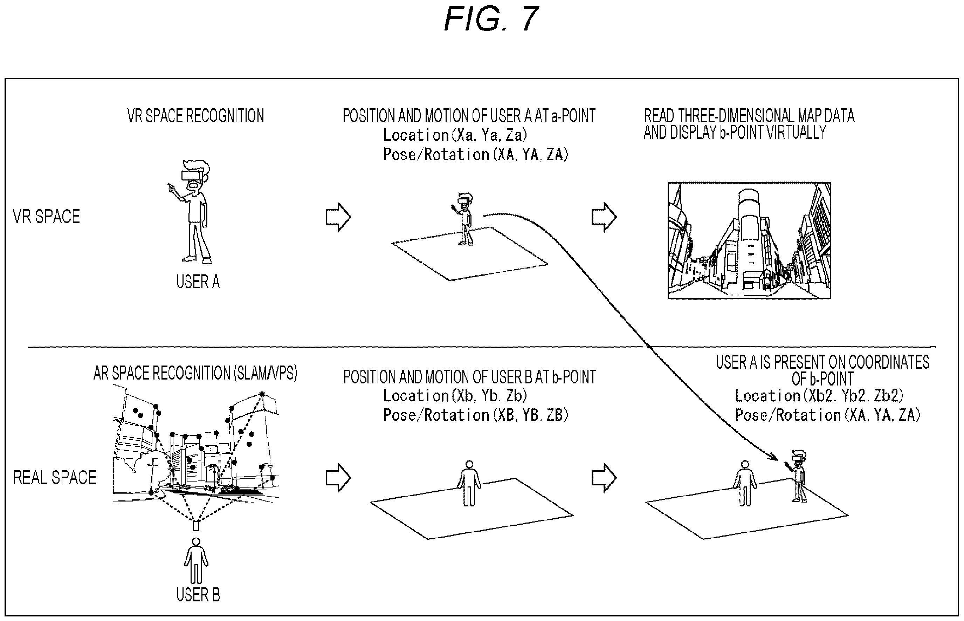

Here, the matching between the coordinate system of the VR space and the coordinate system of the real space will be described with real reference to Fig. 7.

The upper part of Fig. 7 illustrates the flow of processing for the VR space in which a user A is present, and the lower part of Fig. 7 illustrates the flow of processing for the real space in which a user B is present.

In the VR space, VR space recognition processing based on the motion of the user A is performed, and thus the positional information (Xa, Ya, Za) and the motion information (XA, YA, ZA) of an a-point of the user A are acquired.

On the other hand, in the real space, AR space recognition processing by SLAM and VPS, based on the motion of the user B, is performed, and thus the positional information (Xb, Yb, Zb) and the motion information (XB, YB, ZB) of a b-point of the user B are acquired.

In this state, it is assumed that after the coordinate system of the VR space and the coordinate system of the real space are matched, in the VR space, the user A moves to a position corresponding to the b-point in the real space. At this time, the avatar of the user A is displayed in AR at the position indicated by the positional information (Xb2, Yb2, Zb2) of the real space in which the user B is present.

On the other hand, in the VR space, the three-dimensional map data at the b-point in the real space, which corresponds to the position where the user A moves, is read, and thus the state of the b-point in the real space is virtually displayed. Note that, although not illustrated, it is assumed that the avatar of the user B is displayed in VR at the b-point where virtual display is performed.

Note that, in a case where the user A moves in the VR space, the movement amount and movement speed of the user A may be adjusted by a controller connected to the VR device 100 or other inputs. For example, in the 6DoF mode, the movement of the user A with one step may be set to the same scale as that in the real space, or may be set in units of 1 km by adjustment of the controller.

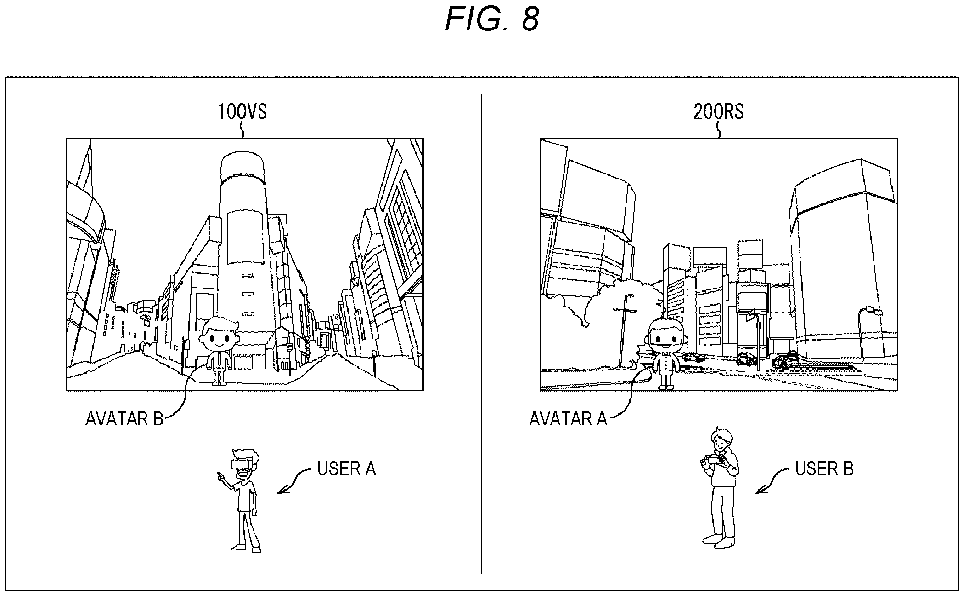

Fig. 8 is a diagram illustrating the presentation example of the VR space and the presentation example of the real space.

In the example of Fig. 8, it is assumed that the user A and the user B are at substantially the same position in the VR space and the real space, and the coordinate system of the VR space and the coordinate system of the real space are matched.

As illustrated on the left side of Fig. 8, by using the VR device 100, the user A can view a VR image 100VS corresponding to a real world viewed from a position where the user B is present in the real space. In the VR image 100VS, an avatar B corresponding to the user B is displayed on the basis of the positional information and motion information of the user B.

On the other hand, as illustrated on the right side of Fig. 8, by using the AR device 200, for example, the user B can view a real image 200RS of the real world, which is captured from the position. In the real image 200RS, an avatar A corresponding to the user A is displayed on the basis of the positional information and motion information of the user A.

Note that, in the VR image 100VS, for example, the avatar of the user present in the real space may be transparently displayed so that the avatar of the user present in the VR space can be distinguished from the avatar present in the real space.

Furthermore, in the real image 200RS, a digital human image may be displayed instead of the avatar of the user so that the user present in the VR space adapts to the real space.

In this way, the user A can communicate with the user B who enjoys the AR service while enjoying the VR service, and the user B can communicate with the user A who enjoys the VR service while enjoying the AR service.

According to the above-described configuration and processing, the users who receive independent services in the VR space and the real space (AR space) can come and go between VR and AR. Furthermore, between a user in the VR space and a user in the real space, providing a seamless service between VR and AR can be realized by presenting an interaction with one user according to the motion of the other user.

### <3. Presentation example of interaction>

Hereinafter, an interaction presented between the user A in the VR space and the user B in the real space (AR space) will be described as an example.

### (Real-time interaction presentation)

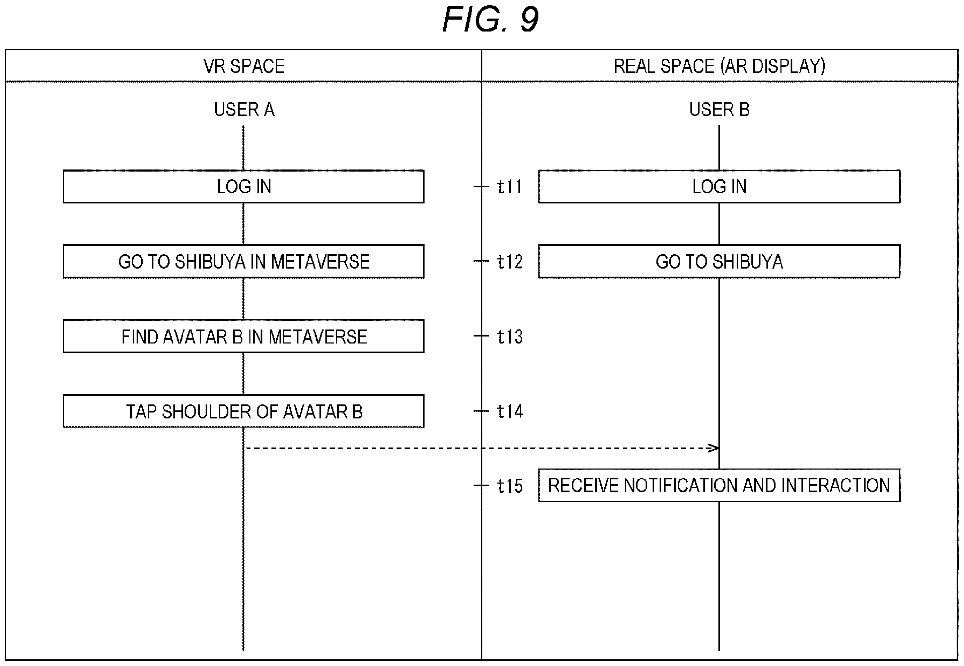

Fig. 9 is a diagram for describing the presentation example of a real-time interaction.

Fig. 9 illustrates the motion of the user A in the VR space and the motion of the user B in the real space (AR display) for each timing. Here, it is assumed that the VR service to which the user A logs in and the AR service to which the user B logs in are integrally provided as the same service, and the user A and the user B have accounts of the same service. The same applies to the presentation examples to be described below.

At timing t11, the user A logs in to the VR space (VR service).

On the other hand, the user B logs in to the AR display (AR service).

At timing t12, the user A goes (moves) to Shibuya in the VR space (hereinafter, also referred to as metaverse). On the other hand, the user B goes (moves) to Shibuya in the real space. At this time, the avatar B corresponding to the user B is present in the vicinity of the user A in the metaverse, and the avatar A corresponding to the user A is present in the vicinity of the user B in the AR display.

At timing t13, the user A finds, in the metaverse, the avatar B corresponding to the user B.

Thereafter, at timing t14, the user A performs a shoulder tapping motion as a direct motion on the avatar B.

Immediately thereafter, at timing t15, the user B receives a notification and an interaction that correspond to the motion of the user A. Specifically, a notification indicating that the shoulder is tapped by the user A is displayed in the AR device 200 held by the user B, or the AR device 200 vibrates.

In this way, the real-time interaction according to the direct motion of the user A with respect to the avatar B allows the user B to notice the motion of the user A in the VR space.

In this example, the real-time interaction with the user A in the metaverse may be presented according to the direct motion of the user B in the real space with respect to the avatar A.

### (Presentation of interaction with time delay)

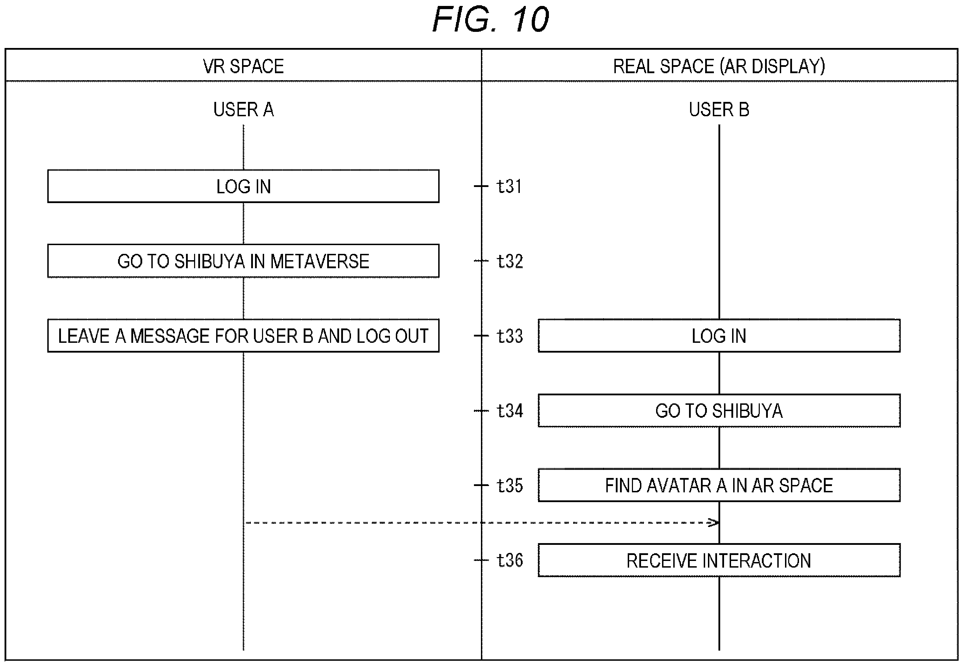

Fig. 10 is a diagram for describing the presentation example of the interaction with a time delay.

At timing t31, the user A logs in to the metaverse (VR service).

Next, at timing t32, the user A goes (moves) to Shibuya in the metaverse. At this time point, the user B has not yet logged in to the AR display (AR service).

Thereafter, at timing t33, the user A leaves a message for the user B and then logs out from the metaverse. At this time, the user B logs in to the AR display (AR service).

At timing t34, the user B goes (moves) to Shibuya in the real space. At this time, the avatar A that does not perform a motion (looks stopped) is present in the vicinity of the user B in the AR display.

At timing t35, the user B finds a motionless avatar A in the AR display.

Immediately thereafter, at timing t36, the user B receives the interaction corresponding to the motion of the user A.

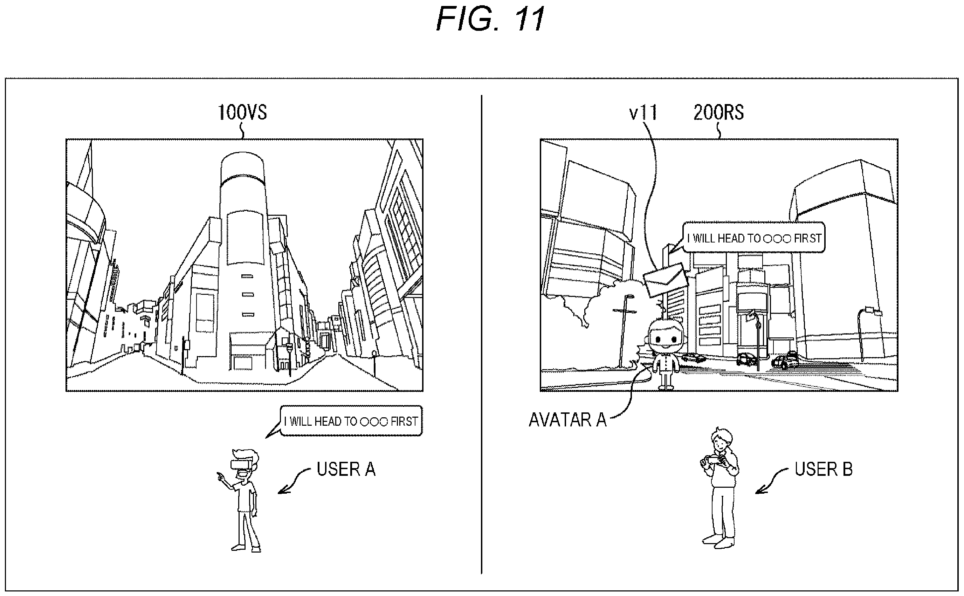

For example, as illustrated in Fig. 11, in response to the message "I will head to ooo first" left by the user A, a virtual object v11 imitating a letter (envelope) is generated and displayed together with the motionless avatar A in the AR device 200 held by the user B. In this state, when the user B performs a motion of touching the virtual object v11 (hand gesture), a message "I will head to ooo first" left by the user A is displayed so as to come out of the virtual object v11. The hand gesture can be detected by bone estimation of the arm (hand) of the user B for the virtual object v11.

Note that, regarding the message left by the user A, a time limit or a time zone in which the message is displayed, and display contents may be set by the user A.

In this way, the user B can check the message left by the user A in the VR space by the interaction with a time difference according to an indirect motion of the user A with respect to the avatar B.

In this example, the interaction with the user A in the metaverse with the time difference may be presented according to the indirect motion of the user B in the real space with respect to the avatar A.

The interaction presented with the virtual object is not limited to the example of Fig. 11. For example, a predetermined icon may be displayed as a virtual object at a position corresponding to a store present in the real space, and the user may perform a hand gesture on the icon to present a coupon available at the store. Furthermore, the virtual object may be moved or a new virtual object may be disposed by the hand gesture of the user.

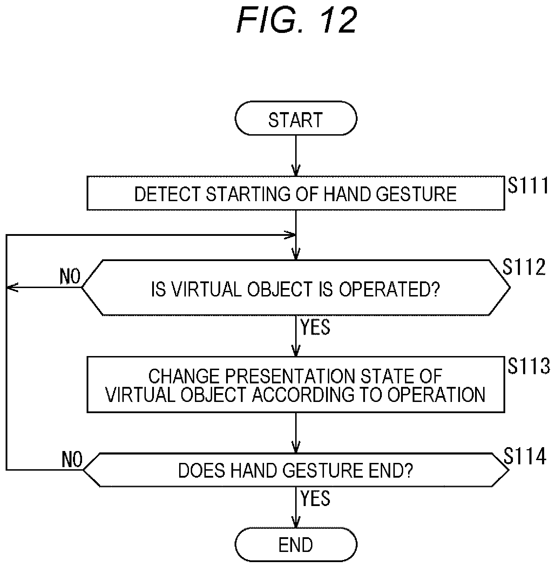

Here, the flow of the operation of the virtual object by using the hand gesture will be described with reference to the flowchart of Fig. 12. The processing of Fig. 12 is executed by the interaction presentation control unit 312, and is started when the user of the VR device 100 or the AR device 200 in which the virtual object is displayed performs a hand gesture.

In step S111, the interaction presentation control unit 312 detects the start of the hand gesture of the user.

In step S112, the interaction presentation control unit 312 determines whether or not the virtual object displayed in the device is operated by the hand gesture.

In a case where it is determined in step S112 that the virtual object is operated, the processing proceeds to step S113, and the interaction presentation control unit 312 changes the presentation mode of the virtual object according to the operation.

In step S114, the interaction presentation control unit 312 determines whether or not the hand gesture ends. In a case where it is determined in step S114 that the hand gesture does not end, the processing returns to step S112, and the subsequent processing are repeated.

On the other hand, in a case where it is determined in step S114 that the hand gesture ends, the processing ends.

Note that, in a case where it is determined in step S112 that the virtual object is not operated, step S112 is repeated until it is determined that the virtual object is operated, but the processing may end at the time when a predetermined time elapses.

As described above, various interactions can be presented to the user by the hand gesture with respect to the virtual object.

### (Interaction presentation corresponding to state change of user)

In accordance with a state change of the user in one space, the presentation mode of the avatar corresponding to the user in the other space may be changed.

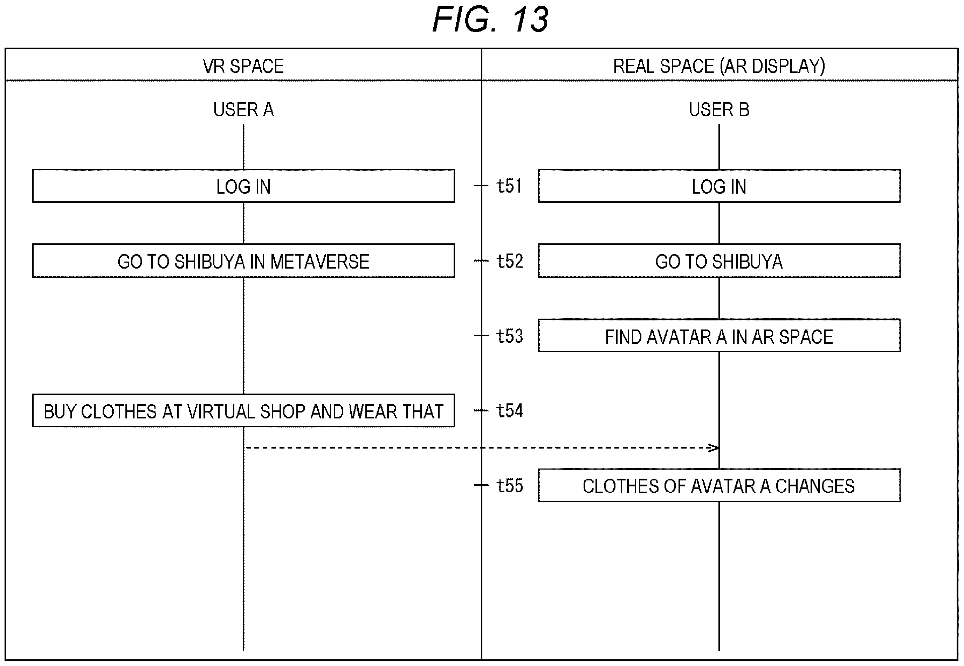

Fig. 13 is a diagram for describing the presentation example of an interaction according to the state change of the user.

At timing t51, the user A logs in to the metaverse (VR service). On the other hand, the user B logs in to the AR display (AR service).

At timing t52, the user A goes (moves) to Shibuya in the metaverse. On the other hand, the user B goes (moves) to Shibuya in the real space.

At timing t53, the user B finds the avatar A in the AR display.

Thereafter, at timing t54, the user A purchases clothes at a virtual shop in the metaverse and wears the clothes.

Immediately thereafter, at timing t55, the clothes of the avatar A found by the user B in the AR display changes. Specifically, the clothes of the avatar A is switched to the clothes purchased by the user A at the virtual store in the metaverse.

In this way, with the change of the presentation mode of the avatar A according to the state change of the user A, the user B can notice the state change of the user A present in the VR space.

In this example, the presentation mode of the avatar B displayed in the metaverse may be changed according to the state change of the user B present in the real space.

The change of the presentation mode of the avatar according to the state change of the user is not limited to the change of the avatar's clothes according to the user wearing the clothes. For example, when the user wears articles such as bags, shoes, and hats, the mode may be changed to a mode in which the avatar wears these articles. Furthermore, the presentation mode of the avatar may change according to a change in physical condition of the user, such as the user being infected with a specific virus, the user being vaccinated with a specific virus, or the like.

### (Sharing object)

The object may be shared by presenting the recognized object in one space on the basis of the recognition result for the object designated by the user in the other space.

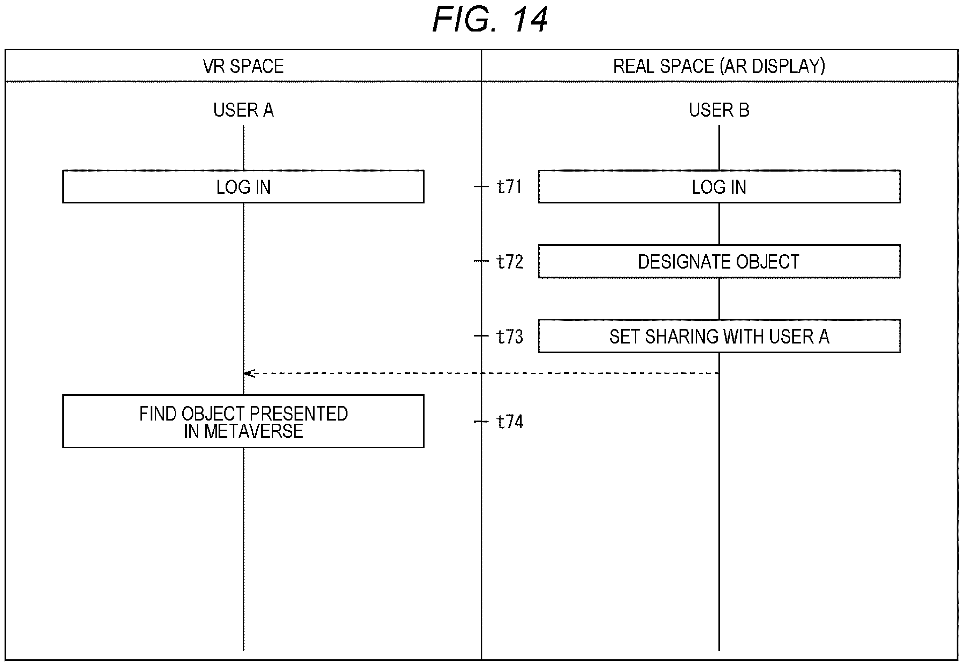

Fig. 14 is a diagram for describing sharing of the object.

At timing t71, the user A logs in to the metaverse (VR service). On the other hand, the user B logs in to the AR display (AR service).

At timing t72, the user B designates the object displayed in the AR device 200. The object designated herein is an object in the real space, but may be a virtual object in the AR display.

Thereafter, at timing t73, the user B sets sharing of the designated object with the user A. At this time, the image data of the designated object is transmitted from the AR device 200 to the synchronization service provision device 300, and object recognition processing is performed on the object. As the recognition result, the image data of the virtual object corresponding to the object is transmitted from the synchronization service provision device 300 to the VR device 100 and presented in the metaverse in which the user A is present.

That is, at timing t74, the user A finds the object presented in the metaverse.

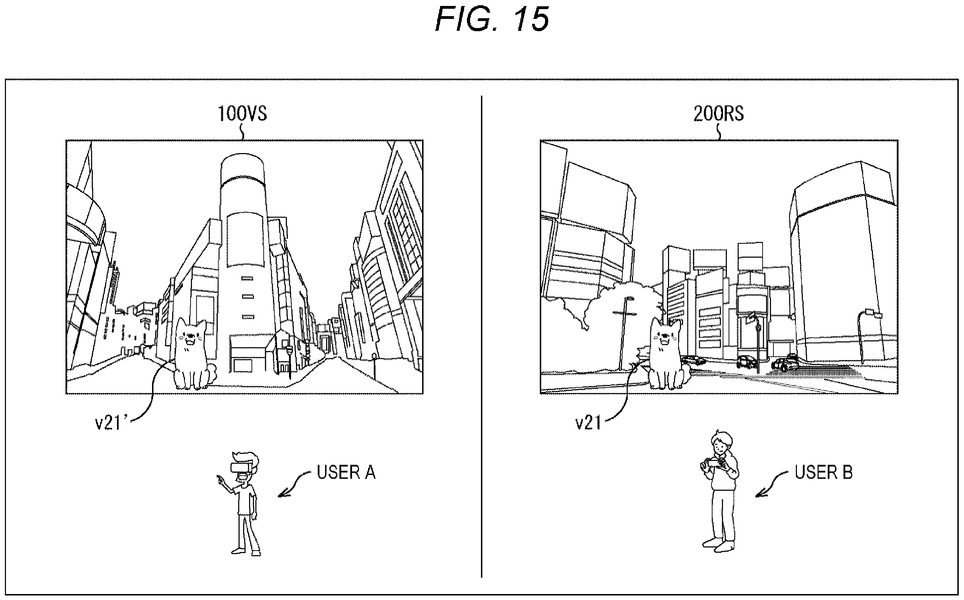

For example, as illustrated in Fig. 15, a real object v21 such as a dog is designated by the user B on the real image 200RS displayed in the AR device 200. In this state, when the user B sets sharing of the real object v21 with the user A, a virtual object v21' corresponding to the real object v21 is displayed on the VR image 100VS displayed in the VR device 100.

In this way, as the virtual object, the object designated by the user in the real space can be shared with the user in the VR space.

In this example, as the virtual object that is AR information, the virtual object designated by the user in the VR space may be shared with the user in the real space.

### <4. Example of interaction in multi-metaverse>

In the VR/AR synchronization service described above, only one metaverse (VR space) is built, but a plurality of metaverses (hereinafter, also referred to as multi-metaverse) according to the user's needs may be built.

Hereinafter, a configuration and operation of the synchronization system that implements the VR/AR synchronization service capable of building the multi-metaverse will be described.

### (Entire configuration of synchronization system)

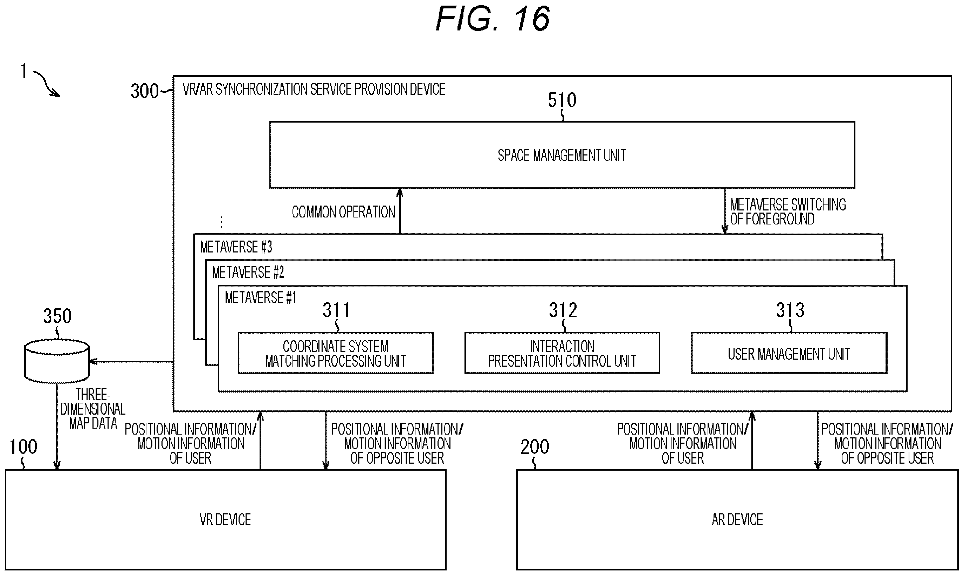

Fig. 16 is a diagram illustrating a configuration example of the synchronization system that realizes building of the multi-metaverse.

In a synchronization system 1 of Fig. 16, detailed configurations of the VR device 100 and the AR device 200 are omitted, but the configurations of the VR device 100 and the AR device 200 are assumed to be similar to configurations of the VR device 100 and the AR device 200 in the synchronization system 1 of Fig. 2.

The synchronization system 1 of Fig. 16 is different from the synchronization system 1 of Fig. 2 in that, in the synchronization service provision device 300, the coordinate system matching processing unit 311, the interaction presentation control unit 312, and the user management unit 313 are provided for each of a plurality of metaverses (metaverses #1, #2, #3, ...) and a space management unit 510 is newly provided.

In the synchronization system 1 of Fig. 16, for example, each of a plurality of the metaverses can be built for each community such as a workplace, a school, and a place for a hobby.

The coordinate system matching processing unit 311, the interaction presentation control unit 312, and the user management unit 313 perform, under the management of the space management unit 510, coordinate system matching, interaction presentation control, and user management for each corresponding metaverse (VR space).

Note that the coordinate system matching processing unit 311, the interaction presentation control unit 312, and the user management unit 313 may be provided in common for a plurality of the metaverses, and each processing may be executed transversely across a plurality of the metaverses.

The space management unit 510 controls the coordinate system matching processing unit 311, the interaction presentation control unit 312, and the user management unit 313 of each metaverse to manage a plurality of coexisting metaverses (VR spaces). Specifically, the space management unit 510 provides a portal service that allows the user to come and go between the metaverses as a service that control the multi-metaverse.

The space management unit 510 receives an operation (common operation) common in each metaverse, sets a metaverse serving as a foreground for each user, and performs switching to the set metaverse.

With the above-described configuration, the user who receives the VR service in the VR/AR synchronization service can come and go between a plurality of the metaverses.

In the VR/AR synchronization service as described above, the users who receive independent services in the VR space and the real space (AR space) can come and go between the VR and the AR. Furthermore, between a user in the VR space and a user in the real space, an interaction with one user can be presented according to the motion of the other user.

### (Interaction presentation)

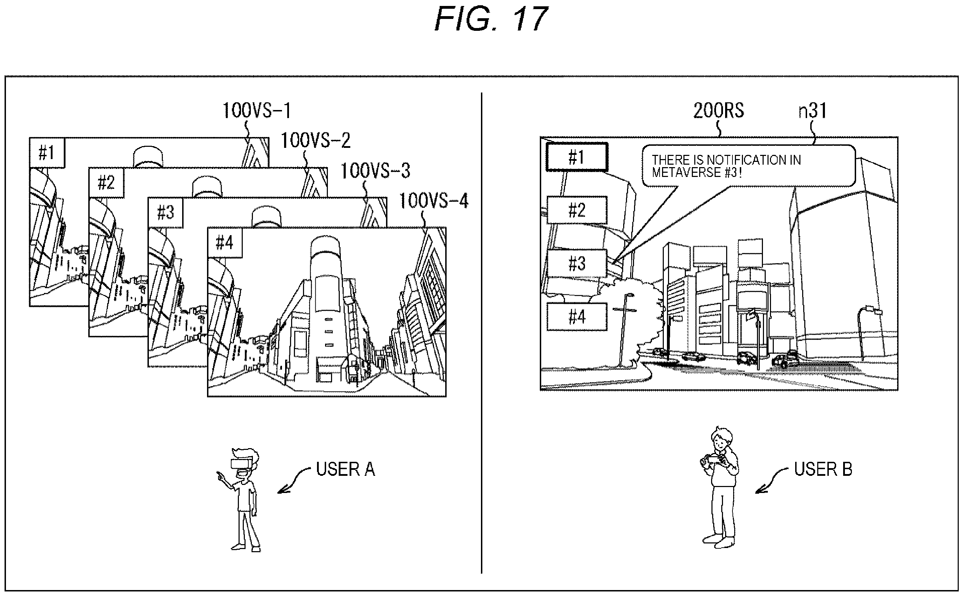

Fig. 17 is a diagram illustrating the presentation examples of a plurality of the metaverses and the presentation example of the real space.

In the example of Fig. 17, it is assumed that the user A and the user B are at substantially the same position in the metaverses #1 to #4 and the real space, and the coordinate systems of the metaverses #1 to #4 and the coordinate system of the real space are matched.

As illustrated on the left side of Fig. 17, by using the VR device 100, the user A can view any one of VR images 100VS-1 to 100VS-4 corresponding to the real world viewed from a position where the user B is present in the real space.

Here, according to the motion of the user A present in any one of the metaverses, a notification related to the metaverse in which the user A is present may be presented to the user B present in the real space (AR space).

For example, in the VR service to which the user A logs in, it is assumed that the metaverse #3 of the metaverses #1 to #4 is set to a foreground. In this state, in a case where the user A performs an action for leading to an interaction with the user B, for example, a message n31 indicating that there is a notification in the metaverse #3 is superimposed and displayed on the real image 200RS viewed by the user B as illustrated on the right side of Fig. 17.

At the left end of the real image 200RS, icons respectively corresponding to the metaverses #1 to #4 with which the user B can communicate are illustrated, and the message n31 is presented in a form of a balloon from the icon corresponding to the metaverse #3. Note that in the example of Fig. 17, the user B is in a state of being able to communicate with the metaverse #1, and the icon corresponding to the metaverse #1 is displayed in a thick frame.

In this way, the user B present in the real space (AR space) can easily know in which one of a plurality of communicable metaverses there is an action.

Furthermore, a notification related to another metaverse may be presented to the user A present in one metaverse.

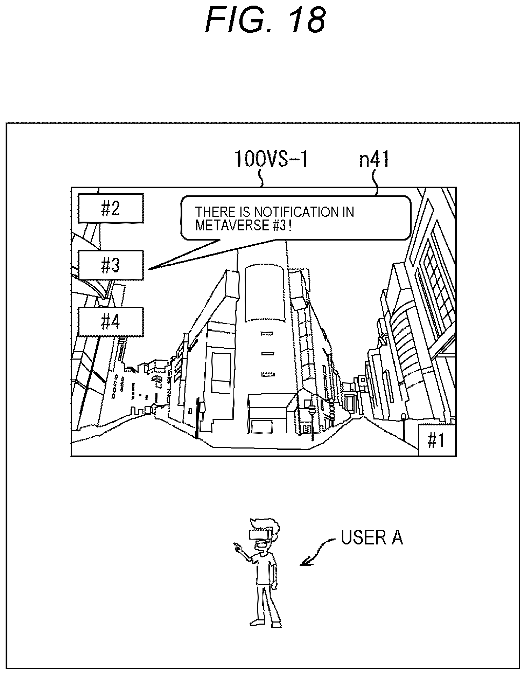

For example, in the VR service to which the user A logs in, it is assumed that the metaverse #1 of the metaverses #1 to #4 is set to a foreground for the user A. In this case, as illustrated in Fig. 18, the VR device 100 allows the user A to view the VR image 100VS-1 in metaverse #1. In this state, for example, in a case where an interaction with the user A occurs in the metaverse #3 which is a background, a message n41 indicating that there is a notification in the metaverse #3 is superimposed and displayed on the VR image 100VS-1 that is viewed by the user A.

At the left end of the VR image 100VS-1, icons respectively corresponding to the metaverses #2 to #4 which are the backgrounds are illustrated, and the message n41 is presented in a form of a balloon from the icon corresponding to the metaverse #3.

In this way, the user A present in the multi-metaverse can easily know that there is an action in the background metaverse.

Note that the interaction (notification) as described above may be presented between the users who log in to the VR service in which the multi-metaverse is built. In this case, in a case where a certain user is present in one metaverse, when an interaction with the user occurs in another metaverse, the movement confirmation to another metaverse may be presented.

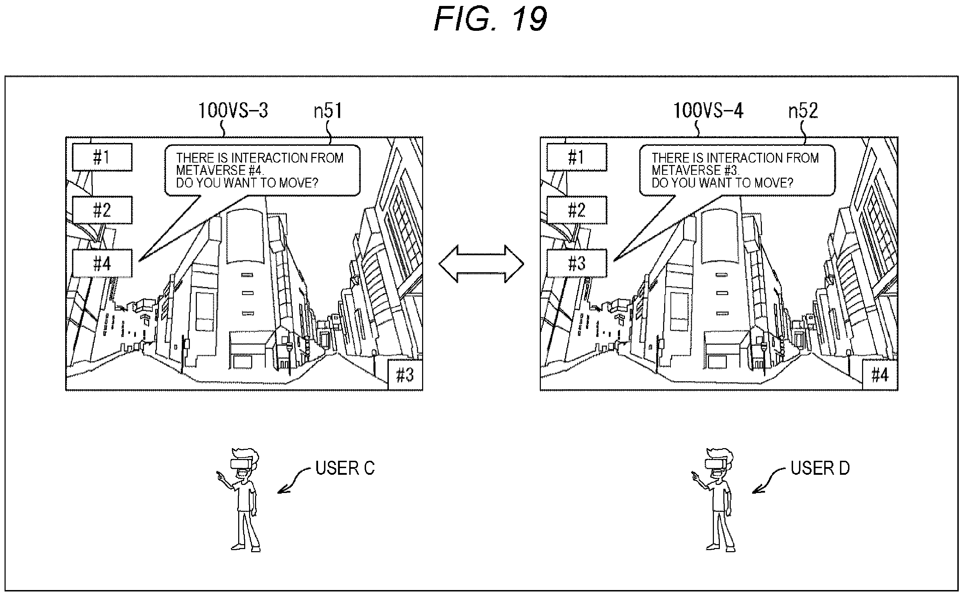

For example, as illustrated in Fig. 19, among the VR services to which a user C and a user D log in, it is assumed that the metaverse #3 is set to the foreground for the user C and the metaverse #4 is set to the foreground for the user D. In this case, the VR device 100 allows the user C to view a VR image 100VS-3 in the metaverse #3, and the VR device 100 allows the user D to view a VR image 100VS-4 in the metaverse #4.

In this state, in a case where the user D in the metaverse #4 performs an action leading to an interaction with the user C, a message n51 for the movement confirmation to the metaverse #4 in which there is the interaction is superimposed and displayed on the VR image 100VS-3 viewed by the user C.

On the other hand, in a case where the user C present in the metaverse #3 performs an action leading to an interaction with the user D, a message n52 for the movement confirmation to the metaverse #3 in which there is the interaction is superimposed and displayed on the VR image 100VS-4 viewed by the user D.

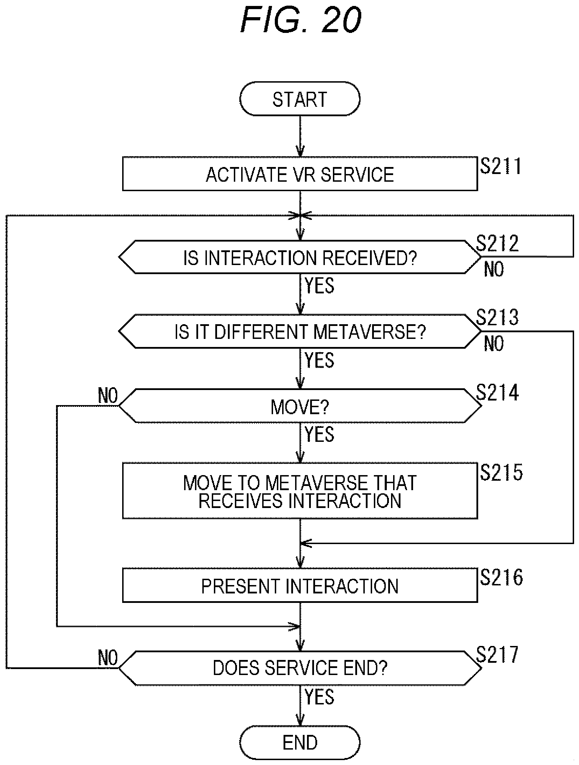

Here, the flow of movement between the metaverses based on the movement confirmation described with reference to Fig. 19 will be described with reference to the flowchart of Fig. 20. The processing of Fig. 19 is executed by the VR device 100 under the control of the synchronization service provision device 300.

In step S211, the synchronization service application 130 activates the VR service according to the operation of the user wearing the VR device 100. Thus, the user can log in to the VR space. Note that, in the VR space herein, it is assumed that the multi-metaverse is developed.

In step S212, the synchronization service application 130 determines whether or not the interaction with the user wearing the VR device 100 is received. Step S212 is repeated until it is determined that the interaction is received.

In a case where it is determined in step S212 that the interaction is received, the processing proceeds to step S213, and the synchronization service application 130 determines whether or not the metaverse that receives the interaction is not a foreground metaverse but another metaverse (background metaverse).

In a case where it is determined in step S213 that the metaverse that receives the interaction is another metaverse, the processing proceeds to step S214, and the synchronization service application 130 determines whether or not to move to the metaverse that receives the interaction. The determination as to whether or not to move to the metaverse that receives the interaction is performed on the basis of the operation of the user according to the movement confirmation described with reference to Fig. 19.

In a case where it is determined in step S214 that the user moves to the metaverse that receives the interaction, in step S215, the synchronization service application 130 moves to the metaverse that receives the interaction under the control of the space management unit 510 of the synchronization service provision device 300.

In step S216, the synchronization service application 130 presents the interaction in the metaverse to which the synchronization service application 130 moves under the control of the synchronization service provision device 300.

On the other hand, in a case where it is determined in step S213 that the metaverse that receives the interaction is not another metaverse, steps S214 and S215 are skipped, and in step S216, the interaction is presented in the foreground metaverse.

Furthermore, in a case where it is determined in step S214 that the user does not move to the metaverse that receives the interaction, steps S215 and S216 are skipped, and the interaction is not presented.

After the above-described processing, in step S217, the synchronization service application 130 determines whether or not the VR service ends according to the operation of the user wearing the VR device 100.

In a case where it is determined in step S217 that the VR service does not end, the processing returns to step S212, and the subsequent processing are repeated.

On the other hand, in a case where it is determined in step S217 that the VR service ends, the presentation of the metaverse to the user wearing the VR device 100 ends, and the user logs out from the VR space.

According to the above-described processing, the user who logs in to the VR service in which the multi-metaverse is built can reliably receive the interaction occurring in the background metaverse.

Note that in the above-described embodiment, between the user in the VR space and the user in the real space, providing a seamless service between VR and AR can be realized by presenting an interaction with one user according to the motion of the other user. The present disclosure is not limited thereto, between the users in a plurality of the VR spaces such as the multi-metaverse, providing a seamless service between VRs can be realized by presenting an interaction with one user according to the motion of the other user.

Furthermore, in the above-described embodiment, the coordinate system matching and the presentation control of the interaction are executed by the synchronization service provision device 300, but at least a part of these functions may be executed by the synchronization service application 130 of the VR device 100 or the synchronization service application 230 of the AR device 200.

### <5. Configuration example of computer>

The series of processing described above can be executed by hardware and also can be executed by software. In a case where the series of processing is executed by the software, a program constituting the software is installed on a computer built into dedicated hardware or a general-purpose personal computer from a program recording medium, or the like.

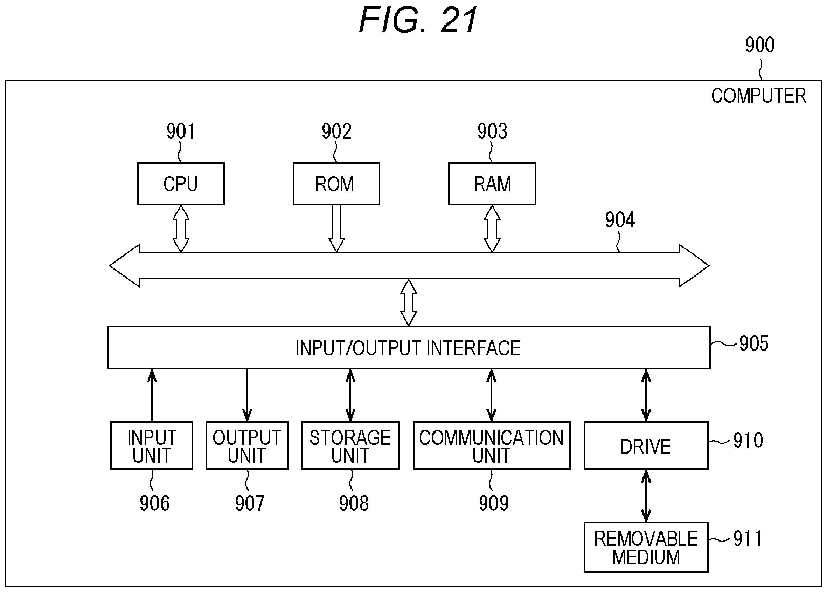

Fig. 21 is a block diagram illustrating a configuration example of the hardware of the computer that executes the above-described series of processing by the program.

The VR device 100, the AR device 200, and the synchronization service provision device 300 as the information processing device to which the technology according to the present disclosure is applicable are implemented by a computer 900 having the configuration illustrated in Fig. 21.

A CPU 901, a read only memory (ROM) 902, and a random access memory (RAM) 903 are connected to each other via a bus 904.

An input/output interface 905 is further connected to the bus 904. An input unit 906 including a keyboard and a mouse, and an output unit 907 including a display and a speaker are connected to the input/output interface 905. Furthermore, a storage unit 908 including a hard disk and a nonvolatile memory, a communication unit 909 including a network interface, and a drive 910 that drives a removable medium 911 are connected to the input/output interface 905.

In the computer configured as described above, for example, the CPU 901 loads a program stored in the storage unit 908 into the RAM 903 via the input/output interface 905 and the bus 904 and executes the program to perform the above-described series of processing.

For example, the program executed by the CPU 901 is recorded in the removable medium 911, or provided via a wired or wireless transmission medium such as a local area network, the Internet, or digital broadcasting, and then installed in the storage unit 908.

Note that, the program executed by the computer may be a program in which processing is performed in time series in the order described herein, or may be a program in which processing is performed in parallel or at necessary timing such as when a call is made and the like.

Embodiments of the present disclosure are not limited to the above-described embodiments, and various modifications can be made in a range without departing from the gist of the present disclosure.

Furthermore, the effects described herein are merely examples and are not limited, and there may be other effects.

Moreover, the present disclosure may have the following configurations.
(1) An information processing device including:
   a matching processing unit configured to match a coordinate system set in a first space in which a first user is present with a coordinate system set in a second space in which a second user is present; and
   a presentation control unit configured to control presentation of an interaction with one user in accordance with a motion of the other user on the basis of positional information and motion information of the first user and positional information and motion information of the second user in the matched coordinate system.
(2) The information processing device according to (1),
   in which one of the first space and the second space is a VR space, and
   the other one of the first space and the second space is a real space.
(3) The information processing device according to (2),
   in which the presentation control unit controls presentation of the VR space based on three-dimensional map data corresponding to the real space to the first user or the second user present in the VR space.
(4) The information processing device according to (2),
   in which the presentation control unit controls presentation of the interaction using AR information to the first user or the second user present in the real space.
(5) The information processing device according to any one of (1) to (3),
   in which the presentation control unit controls presentation of the interaction in a case where each of the first user and the second user has an account of the same service.
(6) The information processing device according to any one of (1) to (4),
   in which the presentation control unit controls display of a first avatar corresponding to the first user in the second space and display of a second avatar corresponding to the second user in the first space on the basis of the positional information and motion information of each of the first user and the second user.
(7) The information processing device according to (6),
   in which the presentation control unit controls real-time presentation of the interaction to the second user in the second space in accordance with a direct motion of the first user in the first space with respect to the second avatar.
(8) The information processing device according to (6),
   in which the presentation control unit controls presentation of the interaction to the second user in the second space with a time delay in accordance with an indirect motion of the first user in the first space with respect to the second avatar.
(9) The information processing device according to (8),
   in which the presentation control unit generates a virtual object as the interaction with the second user, and changes a presentation mode of the virtual object in accordance with an operation of the virtual object by the second user.
(10) The information processing device according to (6),
   in which the presentation control unit changes a presentation mode of the first avatar in the second space in accordance with a state change of the first user in the first space.
(11) The information processing device according to (10),
   in which the state change includes wearing of clothes, wearing of an article, and changing of a physical state.
(12) The information processing device according to (6),
   in which the presentation control unit controls presentation of the object in the second space on the basis of a recognition result of the object designated by the first user in the first space.
(13) The information processing device according to any one of (1) to (12), further including
   a space management unit configured to manage a plurality of the coexisting first spaces,
   in which the matching processing unit matches the coordinate system set in the first space with the coordinate system set in the second space for each of a plurality of the first spaces.
(14) The information processing device according to (13),
   in which the presentation control unit controls presentation of a notification regarding the first space in which the first user is present to the second user present in the second space in accordance with a motion of the first user present in any one of the first spaces.
(15) The information processing device according to (13),
   in which the presentation control unit controls presentation of a notification regarding one of the first spaces to the first user present in another one of the first spaces.
(16) The information processing device according to (13),
   in which in a case where the first user is present in one of the first spaces, when the interaction with the first user occurs in another one of the first spaces, the presentation control unit controls presentation of a movement confirmation to another one of the first spaces.
(17) The information processing device according to any one of (1) to (16),
   in which the interactions are presented by devices held or worn by the first user and the second user.
(18) The information processing device according to (17),
   in which each of the devices is at least one of an HMD, goggles, glasses, and a mobile terminal.
(19) An information processing method including:
   by an information processing device,
   matching a coordinate system set in a first space in which a first user is present with a coordinate system set in a second space in which a second user is present; and
   controlling presentation of an interaction with one user in accordance with a motion of the other user on the basis of positional information and motion information of the first user and positional information and motion information of the second user in the matched coordinate system.
(20) A program for causing a computer to execute processing of:
   matching a coordinate system set in a first space in which a first user is present with a coordinate system set in a second space in which a second user is present; and
   controlling presentation of an interaction with one user in accordance with a motion of the other user on the basis of positional information and motion information of the first user and positional information and motion information of the second user in the matched coordinate system.

### REFERENCE SIGNS LIST

- 1: Synchronization system
- 100: VR device
- 130: Synchronization service application
- 140: VR presentation unit
- 200: VR device
- 230: Synchronization service application
- 240: AR presentation unit
- 300: VR/AR synchronization service provision device
- 311: Coordinate system matching processing unit
- 312: Interaction presentation control unit
- 313: User management unit
- 350: Three-dimensional map data server
- 510: Space management unit

## Claims

1. An information processing device comprising:
a matching processing unit configured to match a coordinate system set in a first space in which a first user is present with a coordinate system set in a second space in which a second user is present; and
a presentation control unit configured to control presentation of an interaction with one user in accordance with a motion of the other user on a basis of positional information and motion information of the first user and positional information and motion information of the second user in the matched coordinate system.

2. The information processing device according to claim 1,
wherein one of the first space and the second space is a VR space, and
the other one of the first space and the second space is a real space.

3. The information processing device according to claim 2,
wherein the presentation control unit controls presentation of the VR space based on three-dimensional map data corresponding to the real space to the first user or the second user present in the VR space.

4. The information processing device according to claim 2,
wherein the presentation control unit controls presentation of the interaction using AR information to the first user or the second user present in the real space.

5. The information processing device according to claim 1,
wherein the presentation control unit controls presentation of the interaction in a case where each of the first user and the second user has an account of the same service.

6. The information processing device according to claim 1,
wherein the presentation control unit controls display of a first avatar corresponding to the first user in the second space and display of a second avatar corresponding to the second user in the first space on a basis of the positional information and motion information of each of the first user and the second user.

7. The information processing device according to claim 6,
wherein the presentation control unit controls real-time presentation of the interaction to the second user in the second space in accordance with a direct motion of the first user in the first space with respect to the second avatar.

8. The information processing device according to claim 6,
wherein the presentation control unit controls presentation of the interaction to the second user in the second space with a time delay in accordance with an indirect motion of the first user in the first space with respect to the second avatar.

9. The information processing device according to claim 8,
wherein the presentation control unit generates a virtual object as the interaction with the second user, and changes a presentation mode of the virtual object in accordance with an operation of the virtual object by the second user.

10. The information processing device according to claim 6,
wherein the presentation control unit changes a presentation mode of the first avatar in the second space in accordance with a state change of the first user in the first space.

11. The information processing device according to claim 10,
wherein the state change includes wearing of clothes, wearing of an article, and changing of a physical state.

12. The information processing device according to claim 6,
wherein the presentation control unit controls presentation of the object in the second space on a basis of a recognition result of the object designated by the first user in the first space.

13. The information processing device according to claim 1, further comprising
a space management unit configured to manage a plurality of the coexisting first spaces,
wherein the matching processing unit matches the coordinate system set in the first space with the coordinate system set in the second space for each of a plurality of the first spaces.

14. The information processing device according to claim 13,
wherein the presentation control unit controls presentation of a notification regarding the first space in which the first user is present to the second user present in the second space in accordance with a motion of the first user present in any one of the first spaces.

15. The information processing device according to claim 13,
wherein the presentation control unit controls presentation of a notification regarding one of the first spaces to the first user present in another one of the first spaces.

16. The information processing device according to claim 13,
wherein in a case where the first user is present in one of the first spaces, when the interaction with the first user occurs in another one of the first spaces, the presentation control unit controls presentation of a movement confirmation to another one of the first spaces.

17. The information processing device according to claim 1,
wherein the interactions are presented by devices held or worn by the first user and the second user.

18. The information processing device according to claim 17,
wherein each of the devices is at least one of an HMD, goggles, glasses, and a mobile terminal.

19. An information processing method comprising:
by an information processing device,
matching a coordinate system set in a first space in which a first user is present with a coordinate system set in a second space in which a second user is present; and
controlling presentation of an interaction with one user in accordance with a motion of the other user on a basis of positional information and motion information of the first user and positional information and motion information of the second user in the matched coordinate system.

20. A program for causing a computer to execute processing of:
matching a coordinate system set in a first space in which a first user is present with a coordinate system set in a second space in which a second user is present; and
controlling presentation of an interaction with one user in accordance with a motion of the other user on a basis of positional information and motion information of the first user and positional information and motion information of the second user in the matched coordinate system.
